# Europäisches Patentamt
## European Patent Office
## Office européen des brevets

(19)

(11) Veröffentlichungsnummer: **0 031 468**
A1

(12) # EUROPÄISCHE PATENTANMELDUNG

(21) Anmeldenummer: **80107401.4**

(22) Anmeldetag: **27.11.80**

(51) Int. Cl.³: **F 16 L 59/14**, B 29 C 17/10

(30) Priorität: **21.12.79 DE 2951660**

(43) Veröffentlichungstag der Anmeldung: **08.07.81**
**Patentblatt 81/27**

(84) Benannte Vertragsstaaten: **AT BE CH DE FR GB IT LI LU NL SE**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Decker, Dirk, Friedensstrasse 46, D-5210 Troisdorf (DE)**
Erfinder: **Lorry, Cosmas, Hoher Rain 5, D-5216 Niederkassel (DE)**

(54) **Isolierhülle aus Weichschaum und Verfahren zu ihrer Herstellung.**

(57) Isolierhülle, insbesondere für Rohre aus Weichschaum, wobei auf der Innenseite der Isolierhülle parallel zur Längsachse des Rohres verlaufende Stege ausgebildet sind und die Kopfbreite der Stege gleich dem Fußabstand der Stege voneinander ist.

EP 0 031 468 A1

- 1 -

Troisdorf, den 13. Dez. 1979
OZ: 79073 (3006) MG/Sch

DYNAMIT NOBEL AKTIENGESELLSCHAFT
Troisdorf, Bez. Köln

## Isolierhülle aus Weichschaum und Verfahren zu ihrer Herstellung

Die Erfindung bezieht sich auf eine Isolierhülle insbesondere für ein Rohr aus einem geschlossenporigen Weichschaum, die parallel zur Längsachse des Rohres geschlitzt ist und gegebenenfalls zum Schließen des Schlitzes mit einem Gleitverschluß, Klebeband od.dgl. ausgerüstet ist und ein Verfahren zum Herstellen einer solchen Isolierhülle.

Isolierhüllen aus Schaumstoff werden insbesondere für Isolationszwecke gegen Kälte oder Wärme, z.B. für die gesamte Sanitärinstallation wie Heißwasser, Kaltwasser, Abwasser, Heizungsleitungen usw. verwendet. Solche Isolierhüllen vorzugsweise in rohrförmiger Gestalt, können entweder direkt extrudiert werden. Es ist jedoch auch möglich, solche Isolierhüllen aus vorgefertigten Schaumstoffbahnen herzustellen, solche Verfahren sind beispielsweise in der

0031468

DE-OS 19 15 768 und der DE-OS 25 32 406 beschrieben. Bei der Herstellung von rohrförmigen Isolierhüllen aus vorgefertigten Schaumstoffbahnen ergibt sich jedoch eine Beschränkung bezüglich der herstellbaren Isolierhüllendicke bei kleinen zu isolierenden Durchmessern. Bei den heute geforderten Isolierdicken von 2/3 des zu isolierenden Rohrdurchmessers ist es nicht mehr möglich, bei kleinen zu isolierenden Durchmessern mit nur einer Schaumstoffbahn entsprechender Dicke die gewünschte Isolierhülle herzustellen, da eine entsprechende starke Stauchung auch von Weichschäumen nicht mehr praktikabel ist.

Der Erfindung liegt die Aufgabe zugrunde, Isolierhüllen insbesondere für Rohre und mit großen Dicken materialsparend und guter Paßform herzustellen. Diese Aufgabe wird durch eine Isolierhülle der eingangs genannten Art dadurch gelöst, daß die Innenseite der Isolierhülle mit parallel zur Längsachse des Rohres verlaufenden Stegen ausgebildet ist, wobei die Kopfbreite der Stege gleich dem Fußabstand der Stege voneinander ist. Diese erfindungsgemäßen Isolierhüllen können mit sehr großen Isolierhüllendicken hergestellt und zu runden oder anderen Querschnitten verformt werden mit hohem Verformungsgrad, wobei die zwischen den Stegen vorhandenen Zwischenräume sich mehr oder weniger schließen. Die verbleibenden Hohlräume zwischen den Stegen erniedrigen den Isolationswert der gesamten Isolierhülle nur unwesentlich, so daß die Funktion nicht beeinträchtigt ist. Es ist auch denkbar, einen Luftstrom durch die verbleibenden Hohlräume der Isolierhülle durchzuleiten. Die Isolierhülle ist auch im nicht erwärmten Zustand des Schaumstoffes leicht verformbar und den zu isolierenden Gegenständen gut anpaßbar.

Eine weitere Ausbildung der erfindungsgemäßen Isolierhülle sieht vor, daß die Stege längs ihrer Kopfkanten miteinander

- 3 -

verbunden, beispielsweise verschweißt sind. Auf diese Weise ist es möglich, der Isolierhülle eine formstabile Form zu geben, z.B. eine Rohrform, so daß sie über ihren Schlitz auf ein zu isolierendes Rohr aufgeschoben in dieser Form und Lage verbleibt. Eine bevorzugte Ausführungsform der Erfindung sieht vor, daß die Höhe des Steges 1/2 bis 4/5 der Dicke der Isolierhülle beträgt, wobei sich dies nach den Formen und Durchmessern der zu isolierenden Gegenstände im einzelnen ausrichtet.

In weiterer Ausgestaltung der Erfindung wird ein Verfahren zum Herstellen von insbesondere dickwandigen Isolierhüllen aus Weichschaum vorgeschlagen, bei dem eine vorgefertigte Schaumstoffbahn unter Ausbildung der Stege gespalten wird und die gespaltene Schaumstoffbahn mit den Stegen nach innen weisend zur Isolierhülle geformt wird. Mit diesem Verfahren können dickwandige Isolierhüllen insbesondere für kleine zu isolierende Durchmesser mit erheblicher Materialersparnis und guter Form gegenüber den bekannten Verfahren hergestellt werden. Die Materialersparnis kann rechnerisch auf einfache Weise ermittelt werden. Bei einer rohrförmigen Isolierhülle mit einem Außendurchmesser $d_a$ und einem Innendurchmesser $d_i$ kommt bei einer extrudierten Isolierhülle im Querschnitt Schaumstoff in einer Größenordnung von

$$\frac{d_a^2 \cdot \pi}{4} - \frac{d_i^2 \cdot \pi}{4}$$

zum Einsatz.

Mehr Schaumstoff im Querschnitt wird nach Verfahren wie sie in der DE-OS 19 15 768 und 29 32 406 beschrieben sind benötigt nämlich

$$d_a \cdot \pi \cdot \frac{1}{2}(d_a - d_i) \quad ,$$

da die zum runden Querschnitt verformten Schaumstoffstreifen gestaucht werden.

Bei der Anwendung des erfindungsgemäßen Verfahrens hingegen wird erheblich weniger Material zum Herstellen der Isolierhülle mit einem rohrförmigen Querschnitt benötigt, nämlich

$$\frac{1}{2} \cdot d_a \cdot \pi \left( \frac{d_a - d_i}{2} + d \right) \quad ,$$

wobei d die Restdicke der Schaumstoffbahn im nicht durch Stege profilierten Bereich darstellt.

Die nach dem erfindungsgemäßen Verfahren herstellbaren Isolierhüllen können sowohl kalt, d.h. bei Raumtemperatur als auch bei erhöhten Temperaturen zu den entsprechend den isolierenden Gegenständen gewünschten Formen geformt werden, insbesondere zu rohrförmigen Isolierungen. Eine Ausführungsform sieht vor, daß längs eines Randes der gespaltenen Schaumstoffbahn über den Rand überstehend ein Selbstklebeband angebracht, beispielsweise angeschweißt wird, um auf diese Weise das Schließen und Fixieren der auf einen Gegenstand angebrachten Isolierhülle auf einfache Weise zu ermöglichen.

Eine bevorzugte Weiterbildung des erfindungsgemäßen Verfahrens sieht vor, daß die gespaltene Schaumstoffbahn auf ihre mit Stegen ausgebildeten Seite kurzzeitig bis in den thermoelastischen bzw. thermoplastischen Zustand erwärmt und danach rohrförmig verformt wird, bis die Stege einander längs ihrer Kopfkanten berühren und längs ihrer Kopfkanten miteinander verschweißen. Auf diese Weise wird

0031468

eine geschlossene Isolierhülle erreicht, die zugleich formtreu d.h. formschlüssig ist. Dieses Verfahren kann in der Weise, wie es in der DE-OS 25 32 406 und entsprechenden Vorrichtung vorteilhaft durchgeführt werden. Es ist überraschend, daß auch mit einer mit Stegen versehenen Schaumstoffbahn eine rohrförmige Isolierhülle mit eingeschlossenen Lufträumen im Bereich der Zwischenräume zwischen den Stegen nach diesem bekannten Verfahren herstellbar ist.

Eine Vorrichtung zum Herstellen der gespaltenen Schaumstoffbahnen für die Isolierhüllen nach der Erfindung zeichnet sich dadurch aus, daß entsprechend den Stegen ein profiliertes beheiztes Messer vorgesehen ist, dem Einzugs- und Abzugswalzenpaare zugeordnet sind, mit denen die zu profilierende Schaumstoffbahn kontinuierlich transportiert wird.

Die Erfindung ist in der Zeichnung beispielsweise dargestellt und wird anhand dieser näher erläutert. Es zeigen

Fig. 1    eine gespaltene Schaumstoffbahn im Querschnitt,

Fig. 2    einen Ausschnitt einer Isolierhülle,

Fig. 3    den Querschnitt durch eine rohrförmige Isolierhülle und

Fig. 4    zwei Ansichten einer Vorrichtung zum Herstellen
und 5    der Schaumstoffbahnen für die Isolierhüllen.

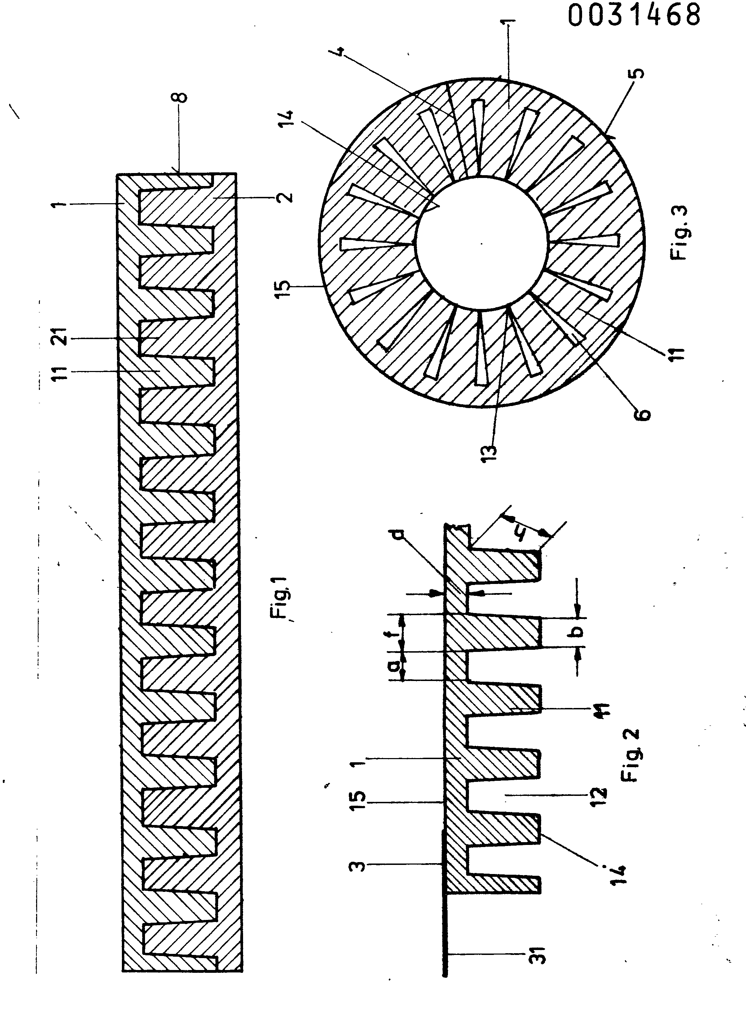

In der Fig. 1 ist im Querschnitt eine für die Herstellung von Isolierhüllen geeignete Schaumstoffbahn 8 aus einem geschlossenzelligen Weichschaum wie z.B. PVC-Schaum, vernetzter Polyäthylenschaumstoff od.dgl. dargestellt.

Diese Schaumstoffbahn 8 wird vorzugsweise in zwei gleiche Hälften 1, 2 unter Ausbildung von Stegen 11, 21 gespalten. Die auf diese Weise entstandenen einseitig mit Stegen versehenen Schaumstoffbahnen 1 bzw. 2 werden dann zu den entsprechenden Isolierhüllen entsprechend den zu isolierenden Gegenständen geformt. In der Fig. 2 ist auszugsweise die die Isolierhülle bildende einseitig profilierte Schaumstoffbahn 1 näher dargestellt. Die mit Stegen versehene Seite der Bahn 1 bildet die Innenseite 14 der Isolierhülle, während an der Außenseite 15 beispielsweise im Bereich der Stoßfugen ein selbstklebendes Band 3 überstehend aufgeschweißt oder aufgeklebt werden kann, dessen überstehender selbstklebender, z.B. mit einer Schutzfolie abgedeckter Rand 31 beim Zusammenfügen der Isolierhülle zum Verschließen der Stoßfuge dient. Stege 11 und Zwischenräume 12 der Schaumstoffbahn 1 sind vorzugsweise gleich groß ausgebildet, d.h. die Kopfbreite b der Stege ist vorzugsweise gleich der dem Fußabstand a der Stege voneinander, die Fußbreite f der Stege ist stets größer als die Kopfbreite b der Stege und die Höhe h der Stege ist vorzugsweise stets größer als die Restdicke d der Schaumstoffbahn 1. Mit einer Schaumstoffbahn 8 einer Dicke von h + 2 d sind zwei Isolierhüllen mit einer Dicke von h + d herzustellen durch die erfindungsgemäß vorgesehene Ausbildung von Stegen, während bei der normalen Verwendung von nicht profilierten Schaumstoffbahnen zum Herstellen von zwei Isolierhüllen Schaumstoffbahnen 8 einer Gesamtdicke von 2h + 2d eingesetzt werden müssen. Hieraus wird die Materialersparnis bei Anwendung der Erfindung besonders deutlich.

In der Fig. 3 ist im Querschnitt eine rohrförmige Isolierhülle 5 dargestellt, bei der die mit Stegen versehene Schaumstoffbahn 1 verformt wird, wobei die Zwischenräume 12 sich bis auf die Schlitze 6 verkleinern und die Stege

0031468

an ihren Köpfen zusammenstoßen und damit eine geschlossene Innenseite bilden. Nach einer bevorzugten Ausführungsform sind die Stege 11 im Bereich ihrer aneinanderstoßenden Kanten 13 miteinander verschweißt, so daß eine außen und innen geschlossene Isolierhülle mit entsprechender Formtreue entsteht. Hierbei ist die Stoßfuge 4 automatisch verschlossen, sie kann jedoch auch zusätzlich mittels außen aufgebrachter Klebebänder oder Gleitverschlüsse verschlossen werden. Es ist auch möglich, die Isolierhülle 1 bzw. 5 außenseitig mit einer Kaschierung aus einer Kunststoffolie oder Aluminiumfolie od.dgl. zu versehen. Darüber hinaus kann die erfindungsgemäße Isolierhülle auch so eingesetzt werden, daß mehrere mit Stegen versehene Schaumstoffbahnen 1 übereinander angeordnet werden, um auf diese Weise entsprechend dickwandige Isolierungen herzustellen. Die Erfindung ist also nicht auf das in der Fig. 3 dargestellte Ausführungsbeispiel beschränkt.

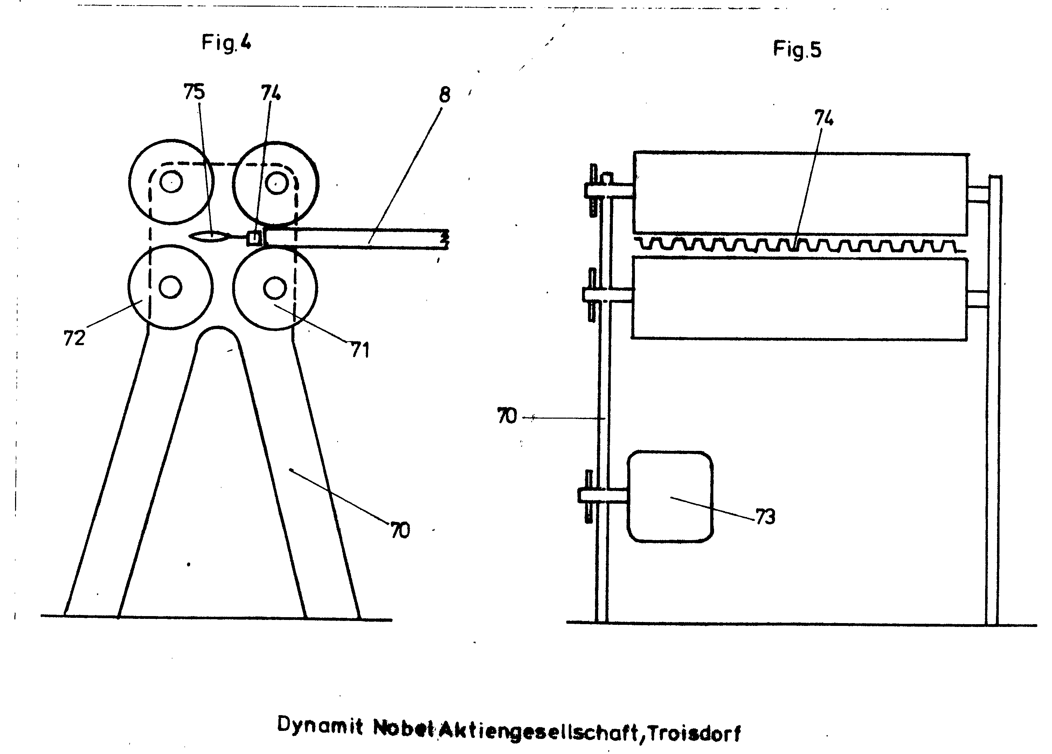

In der Fig. 4 und 5 ist schematisch in zwei Ansichten eine Vorrichtung zum Spalten der Schaumstoffbahn 8 im Sinne der Erfindung für die Herstellung von Isolierhüllen dargestellt. Die Vorrichtung besteht im wesentlichen aus dem Maschinenständer 70, der zwei Walzenpaare 71, 72 die über stufenlos regelbaren Antrieb 73 angetrieben werden, trägt. Zwischen den Walzenpaaren ist das profilierte Trennmesser 74, das mit einer Heizeinrichtung versehen ist angeordnet und mit dem Messerbalken 75 verbunden. Die Schaumstoffbahn 8 wird über das Walzenpaar 71 dem beheizten Trennmesser 74 zugeführt und durch Schmelzschneiden gespalten. Das Walzenpaar 71 ist an seiner Oberfläche vorzugsweise gerauht bzw. mit einem rauhen Belag versehen, um einen einwandfreien Transport der Schaumstoffbahn 8 zu gewährleisten. Die gespaltene Schaumstoffbahn 8 wird dann über das Walzenpaar 71 kontinuierlich abgezogen. Das Trennmesser 74 kann an seiner Schneidkante zur Reduzierung des Schneiddruckes mit einem Wellenschlitz versehen werden. Über den Messerbalken 75 und zusammen mit den beiden oberen Walzen der Walzenpaare 71, 72 kann die Vorrichtung an jede gewünschte Dicke der Bahn 8 angeglichen werden. Je nach gewünschter Stegdimension und damit Profilierung der zu spaltenden Schaumstoffbahn 8 sind entsprechend profilierte Trennmesser 74, siehe aus der Ansicht nach Fig. 5 zu ersehen, einzusetzen.

Die erfindungsgemäß auf der Vorrichtung hergestellten einseitig mit Stegen versehenen Isolierhüllen können selbstverständlich auch unverformt eingesetzt werden beispielsweise für Flächenisolierungen, aber auch für Schallisolierungen in Lüftungskanälen, Kraftfahrzeugbau, Wandbekleidungen, Sportmatten usw.

Patentansprüche:

1. Isolierhülle, insbesondere für ein Rohr, aus einem geschlossenporigen Weichschaum, die parallel zur Längsachse des Rohres geschlitzt ist und gegebenenfalls zum Schließen des Schlitzes mit einem Gleitverschluß, Klebeband od.dgl. ausgerüstet ist, d a d u r c h   g e k e n n z e i c h n e t , daß die Innenseite der Isolierhülle mit parallel zur Längsachse des Rohres verlaufenden Stegen ausgebildet ist, wobei die Kopfbreite der Stege gleich dem Fußabstand der Stege voneinander ist.

2. Isolierhülle nach Anspruch 1, dadurch gekennzeichnet, daß die Stege längs ihrer Kopfkanten miteinander verbunden, beispielsweise verschweißt sind.

3. Isolierhülle nach Anspruch 1 oder 2, dadurch gekennzeichnet, daß die Höhe des Steges 1/2 bis 4/5 der Dicke der Isolierhülle beträgt.

4. Verfahren zum Herstellen einer Isolierhülle nach einem der Ansprüche 1 bis 3, dadurch gekennzeichnet, daß eine vorgefertigte Schaumstoffbahn mit etwas größerer als zweifacher Dicke der herzustellenden Isolierhülle unter Ausbildung der Stege gespalten wird und die gespaltene Schaumstoffbahn mit den Stegen nach innen weisend zur Isolierhülle geformt wird.

5. Verfahren nach Anspruch 4, dadurch gekennzeichnet, daß längs eines Randes der gespaltenen Schaumstoffbahn über den Rand überstehend ein Selbstklebeband angebracht, beispielsweise angeschweißt wird.

6. Verfahren nach einem der Ansprüche 4 oder 5, dadurch gekennzeichnet, daß die gespaltene Schaumstoffbahn auf

0031468

ihrer mit Stegen ausgebildeten Seite kurzzeitig bis in den thermoelastischen bzw. thermoplastischen Zustand erwärmt und danach rohrförmig verformt wird bis die Stege einander längs ihrer Kopfkanten berühren und längs ihrer Kopfkanten miteinander verschweißen.

Fig. 1

Fig. 2

Fig. 3

1/2

0031468

Fig.4

75  74                    8

72                        71

70

Fig.5

74

70

73

2/2

0031468

Dynamit Nobel Aktiengesellschaft, Troisdorf

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH - A - 455 420 (GEORG FISCHER) <br> + Spalte 2, Zeilen 29-38; Fig. 1 + <br> -- | 1 |
| | CH - A - 377 601 (BELL'S ASBESTOS) <br> + Fig. 2,4 + <br> -- | 1 |
| | CH - A - 376 328 (ALFRED NIKLAUS) <br> + Gesamt + <br> -- | 1 |
| | CH - A - 228 042 (MO OCH DOMSJÖ) <br> + Gesamt + <br> -- | 1 |
| | DE - A - 2 223 313 (MÜLLENDER GERNOT) <br> + Patentanspruch 4; Fig. 4,5 + <br> -- | 1 |
| | AT - B - 213 178 (HACKETHAL DRAHT- UND KABELWERKE AKTIENGESELLSCHAFT) <br> + Gesamt + <br> -- | 1 |
| | DE - A - 1 923 421 (ATLAS CHEMICAL INDUSTRIES) <br> + Fig. 3,4 + <br> -- | 1 |
| P | DE - A1 - 2 832 344 (JOHANN BORGERS GMBH & CO KG) (31-01-1980) <br> + Gesamt + <br> -- | 1 |

**KLASSIFIKATION DER ANMELDUNG (Int. Cl.³)**

F 16 L 59/14

B 29 C 17/10

**RECHERCHIERTE SACHGEBIETE (Int. Cl.³)**

F 16 L 59/00

B 29 C 17/00

B 29 D 27/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 25-02-1981 | SCHUGANICH |

EPA form 1503.1 06.78

Europäisches
Patentamt

**EUROPÄISCHER RECHERCHENBERIC...**

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| P | <u>DE - A1 - 2 836 957</u> (KABEL- UND METALLWERKE GUTEHOFFNUNGSHÜTTE AG) (13-03-1980)<br><br>+ Fig. 1-3 +<br><br>-- | 1 | |
| | <u>US - A - 3 196 586</u> (ARMSTRONG CORK CO)<br><br>+ Spalte 2, Zeilen 47-60; Fig. 3 +<br><br>-- | 1,4 | |
| | <u>DE - A - 1 778 881</u> (FEIST)<br><br>+ Seite 6, Zeilen 6-15; Fig. 1 +<br><br>-- | 1,3,4 | RECHERCHIERTE SACHGEBIETE (Int. Cl.³) |
| | <u>AT - B - 245 246</u> (PORON)<br><br>+ Gesamt +<br><br>-- | 1,4 | |
| | <u>DE - A - 2 336 532</u> (ARMSTRONG CORK CO)<br><br>+ Seite 5, Zeilen 1-34; Seite 6, Zeilen 1-27; Fig. 1-3 +<br><br>---- | 5 | |

EPA Form 1503.2   06.78